# EUROPÄISCHE PATENTANMELDUNG

(11) **EP 0 652 664 A1**
(43) Veröffentlichungstag der Anmeldung: **10.05.1995**
(21) Anmeldenummer: 94110321.0
(22) Anmeldetag: 02.07.1994
(51) Int. Cl.: H04M 1/68

(54) **Vorrichtung zur Überwachung eines Telefonanschlusses einer Amtsleitung im Hinblick auf externe Fremdaufschaltungen**

(30) Priorität: 09.11.1993 DE 4338175
(71) Anmelder: SWISSPHONE SYSTEMS GmbH, D-30519 Hannover (DE)
(72) Erfinder: Engin, Ertürk, Dr., D-30659 Hannover (DE)
(74) Vertreter: Lins, Edgar, Dipl.-Phys. Dr.jur.

(57) **Zusammenfassung**

Externe Fremdaufschaltungen auf eine Amtsleitung (1) eines Telefonanschlusses (13) lassen sich mit einer Vorrichtung erkennen, die einen Stromsensor (5) zur Detektion des auf der Amtsleitung (1) fließenden Stromes und einen Spannungsensor (2) zur Detektion des zwischen den Leitern der Amtsleitung (1) vorhandenen Spannung sowie eine Auswerteschaltung (8) aufweist, die eine durch eine hergestellte oder herzustellende Verbindung hervorgerufene Änderung der Spannung und ein gleichzeitiges Fehlen eines zugehörigen Stromflusses am Telefonanschluß (13) als Fremdaufschaltung erkennt.

## Beschreibung

Es ist bekannt, daß immer wieder Diskrepanzen zwischen einer von dem Betreiber des Telefonnetzes erstellten Gebührenabrechnung und der vom Teilnehmer erwarteten Gebührenhöhe eintreten. Soweit diese Diskrepanzen erheblich sind, beruhen sie unter Umständen darauf, daß auf der Amtsleitung des betreffenden Teilnehmers Gespräche geführt worden sind, die nicht von dem Telefonanschluß des Teilnehmers erfolgt sind, sondern aufgrund einer Fremdaufschaltung auf die betreffende Amtsleitung vorgenommen worden sind. Derartige Fremdaufschaltungen können durch Anzapfen der Telefonleitung zwischen dem Telefonanschluß und der nächsten Vermittlung erfolgen oder durch Fehlschaltungen innerhalb der Vermittlung. Derartige Fremdaufschaltungen bleiben für den Fernsprechteilnehmer unbemerkt, so daß der Teilnehmer nach Erhalt der Telefonrechnung regelmäßig nicht in der Lage ist, in rechtlich verwertbarer Weise glaubhaft zu machen, daß die in Rechnung gestellten Telefongebühren zumindest teilweise nicht von ihm verursacht worden sind.

Dieser Mißstand für den Fernsprechteilnehmer wird auch nicht dadurch beseitigt, daß Gebührenzähler an dem Telefonanschluß angebracht werden. Auf die Gebührenzähler werden Gebührenzählimpulse von dem Fernmeldenetz aufgeschaltet, und zwar dieselben Zählimpulse, die auch für die maschinelle Gebührenabrechnung benutzt werden. Der Gebührenzähler ist daher eine (verschlechterte) Kopie des Gebührenzählers im Fernmeldenetz. Eine Fremdaufschaltung kann der Telefonteilnehmer mehr oder weniger zufällig nur dann erkennen, wenn der Gebührenzähler zählt, ohne daß der Telefonanschluß benutzt wird.

Eine gewisse Abhilfe ist durch die Installation einer Zählvergleichsschaltung möglich. Durch diese Schaltung werden alle abgehenden Telefonate registriert und danach dem Teilnehmer schriftlich mitgeteilt. Wegen der Datenschutzbestimmungen muß hierfür das schriftliche Einverständnis aller Benutzer des Teilnehmeranschlusses vorliegen. Darüber hinaus ist die Installation der zählvergleichsschaltung teuer und läßt hohe laufende Kosten entstehen.

Der Erfindung liegt die Aufgabe zugrunde, mit vertretbaren Mitteln einen Schutz gegen Fremdaufschaltungen auf die Amtsleitung eines Telefonanschlusses zu gewähren.

Zur Lösung dieser Aufgabe ist eine Vorrichtung der eingangs erwähnten Art erfindungsgemäß gekennzeichnet durch einen Stromsensor zur Detektion des auf der Amtsleitung fließenden Stromes und einen Spannungssensor zur Detektion der zwischen den Leitern der Amtsleitung vorhandenen Spannung sowie durch eine Auswerteschaltung, die alle durch eine hergestellte oder herzustellende Verbindung hervorgerufene Änderung der Spannung und ein gleichzeitiges Fehlen eines zugehörigen Stromflusses am Telefonanschluß als Fremdaufschaltung erkennt.

Die erfindungsgemäße Vorrichtung läßt sich als einfaches und preiswertes Gerät an einem Telefonanschluß installieren und erlaubt erstmalig in einfacher Weise die Erkennung einer Fremdaufschaltung. Der Funktion der erfindungsgemäßen Vorrichtung liegt die Erkenntnis zugrunde, daß bei einer Belegung der Amtsleitung die Spannung auf der Amtsleitung zusammenbricht. Die Belegung der Amtsleitung ist daher durch die Spannungsüberwachung erkennbar. Eine Änderung der Spannung geschieht ferner beim Wählvorgang. Wird der Wählvorgang mit Wahlimpulsen ausgeführt, ändert sich die Spannung auf der Amtsleitung im Rhythmus der Wahlimpulse. Wird der Wählvorgang mit Wähltönen ausgeführt, sind diese Wähltöne auf die Amtsleitung aufmoduliert und auf der gesamten Amtsleitung zu erkennen.

Wird die Wahl von dem Telefonanschluß des Teilnehmers durchgeführt und von ihm die Amtsleitung belegt, fließt an dem Telefonanschluß ein Strom durch den Stromsensor. Wird hingegen die Amtsleitung von einem fremden Telefonapparat belegt, fließt durch den Stromsensor des Telefonanschlusses kein Strom, so daß die Spannungsveränderung bzw. der Spannungszusammenbruch auf der Amtsleitung bei gleichzeitig fehlendem Stromfluß am regulären Telefonanschluß der Amtsleitung ein sicheres Zeichen für eine erfolgte Fremdaufschaltung ist.

An die Auswerteschaltung kann ein warngerät angeschlossen sein, das den Fernsprechteilnehmer zum Zeitpunkt der Fremdaufschaltung warnt bzw. die Tatsache einer Fremdaufschaltung abspeichern kann. Der Fernsprechteilnehmer kann dann innerhalb kürzester Zeit bei dem Betreiber des Fernsprechnetzes eine Klärung des Sachverhaltes herbeiführen.

Einen besonderen Anwendungsnutzen hat die erfindungsgemäße Vorrichtung dann, wenn der Stromsensor und der Spannungssensor ferner zur Erfassung aller elektrischen Signale am Telefonanschluß verwendet werden. Hierzu ist es zweckmäßig, das Gerät mit einem Speicher zur Abspeicherung der erfaßten elektrischen Signale in unmittelbare oder ausgewerteter Form zu versehen. Mit einem derartigen Gerät können dann alle Vorgänge am Telefonanschluß nachvollzogen werden, wie dies in grundsätzlicher Form in der älteren patentanmeldung P 43 20 812.6 beschrieben ist.

Die Erfindung soll im folgenden anhand von in der Zeichnung dargestellten Ausführungsbeispielen näher erläutert werden. Es zeigen:
- Figur 1: eine schematische Darstellung eines zur Überprüfung der Telefonabrechnung dienenden Gerätes mit der Erkennung einer Fremdaufschaltung
- Figur 2: eine schemtische Darstellung eines vorwiegend zur Eigeninformation dienenden Gerätes mit einer Erkennung einer Fremdaufschaltung
- Figur 3: eine schematische Darstellung von Fremdaufschaltungen.

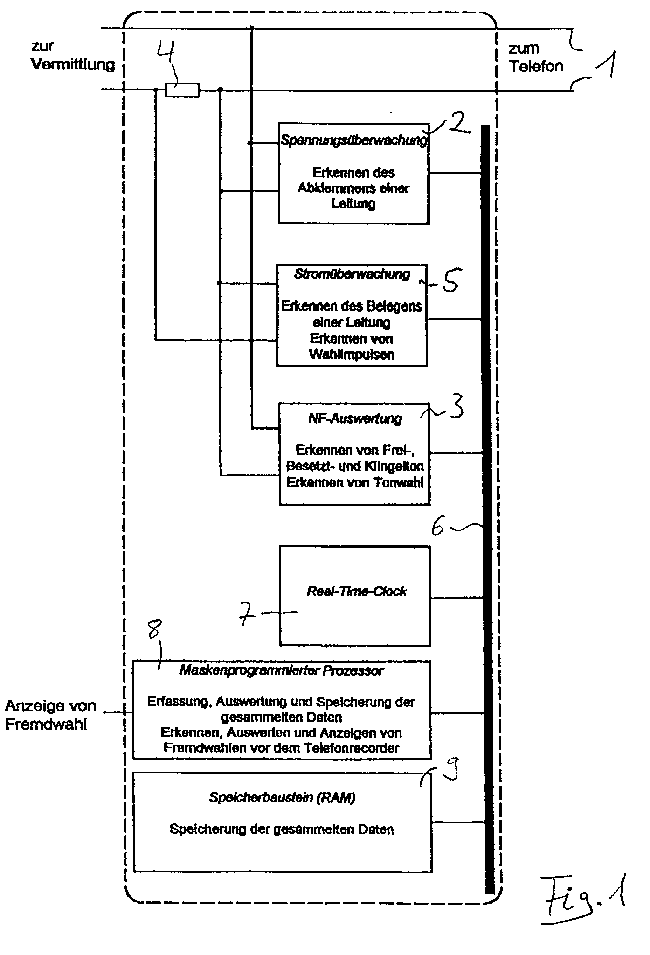

Figur 1 zeigt schematisch den Aufbau eines Gerätes, das an Telefonleitungen 1 im Bereich des Teilnehmers angeschlossen wird. parallel zu den beiden Telefonleitungen weist das Gerät einen Detektor 2 zur Spannungsüberwachung zwischen den beiden Leitungen und einen Detektor 3 zur Auswertung von niederfrequenten Signalen auf, die auf den Leitungen übertragen werden. Die beiden Detektoren 2, 3 sind hochohmig zwischen die beiden Telefonleitungen geschaltet und liegen daher parallel zum Telefon. In eine der Telefonleitungen 1 ist ein Strommeßwiderstand 4 eingeschaltet, dessen spannungsabfall von einem Detektor 5 zur Stromüberwachung gemessen wird.

Mit den Detektoren 2 und 5 läßt sich feststellen, ob ggfs. eine Leitung 1 abgeklemmt worden ist, weil in diesem Fall zwischen den Leitungen 1 keine Spannung anliegt und auf der stromüberwachten Leitung 1 auch kein Strom durch den Detektor 5 detektierbar ist, also auch kein Ruhestrom, der bei aufgelegtem Hörer des Telefons fließt. Durch den Detektor 5 wird einerseits erkannt, daß die Telefonleitung, beispielsweise durch Abnehmen des Hörers, belegt worden ist. Ferner sind die Wahlimpulse erkennbar, die zur Rekonstruktion der gewählten Telefonnummer auswertbar sind.

Mit dem Detektor 3 lassen sich Frei-, Besetzt- und Klingelton erkennen und auswerten. Ferner kann mit diesem Detektor 3 die gewählte Telefonnummer rekonstruiert werden, wenn die Wahl mit Hilfe von ausgesandten Tonkombinationen - also nicht mehr mit Wahlimpulsen - erfolgt.

Die von den Detektoren 2, 3, 5 detektierten Zustände werden als Zustandssignale auf einen internen Bus 6 des Geräts geleitet. An den Bus 6 ist eine interne Uhr 7 angeschlossen. Ein Prozessor 8 dient der Erfassung der Zustandsdaten der Detektoren 2, 3, 5 sowie der zugehörigen Zeitsignale, der Auswertung der gesammelten Daten und der Steuerung der Abspeicherung der so aufbereiteten Daten in einem Speicher 9 des Geräts. Die Abspeicherung kann durch den Prozessor 8 codiert erfolgen, wobei die Codierung des Prozessors vom Hersteller eingestellt und der entsprechende Gegencode zur Entschlüsselung der codierten Daten beim Hersteller oder bei einer amtlichen Stelle versiegelt hinterlegt wird.

Es ist erkennbar, daß der gesamte Telefonverkehr des Teilnehmers auf diese Weise sicher erfaßbar ist. In dem Speicher 9 sind alle Telefonvorgänge abgelegt, die sich in einem vorgegebenen Zeitraum abgespielt haben, beispielsweise innerhalb der jeweils letzten drei Monate. Ältere Daten können automatisch gelöscht werden. Im Falle des Erreichens der Kapazitätsgrenze des Speichers 9 werden die ältesten Daten aus dem Speicher beim Speichern neuer Daten automatisch entfernt.

Der Prozessor 8 kann die Tatsache einer Fremdaufschaltung dadurch erkennen, daß einerseits von den Detektoren 2 oder 3 Wählvorgänge und Belegungsvorgänge auf der Leitung 1 erkannt werden, daß andererseits jedoch der Detektor 5 keine zugehörigen Stromflüsse detektiert, weil das reguläre Telefon zu den Leitungen 1 nicht bedient worden ist.

Es ist zweckmäßig, daß eine festgestellte Fremdwahl sofort als Warnsignal zur Anzeige gebracht wird, sei es durch optische oder akustische Signale. Ggfs. können auch Schaltvorgänge für Rufsignale o.ä. ausgelöst werden.

Das dargestellte Gerät kommt ohne jegliche Bedienung aus und ist nicht dazu vorgesehen, geöffnet zu werden.

Nur im Fall einer groben Diskrepanz zwischen einer erwarteten und einer abgerechneten Gebührenhöhe kann das Gerät entfernt und beispielsweise einem Gutachter zur vertraulichen Auswertung des Inhalts des Speichers 9 unter Verwendung des dem Gutachter zur Verfügung gestellten Gegencodes übergeben werden. Der Gutachter kann dann feststellen, ob die abgerechnete Gebührenhöhe jedenfalls größenordnungsmäßig aufgrund der abgespeicherten Vorgänge zutreffen kann.

Ist das Gerät abgeschaltet bzw. sind die Telefonleitungen 1 für eine gewisse Zeit abgeklemmt gewesen, wird hierdurch die Beweiskraft der aufgezeichneten Daten naturgemäß verringert. Der Teilnehmer wird daher daran interessiert sein, derartige Unterbrechungen nicht vorzunehmen.

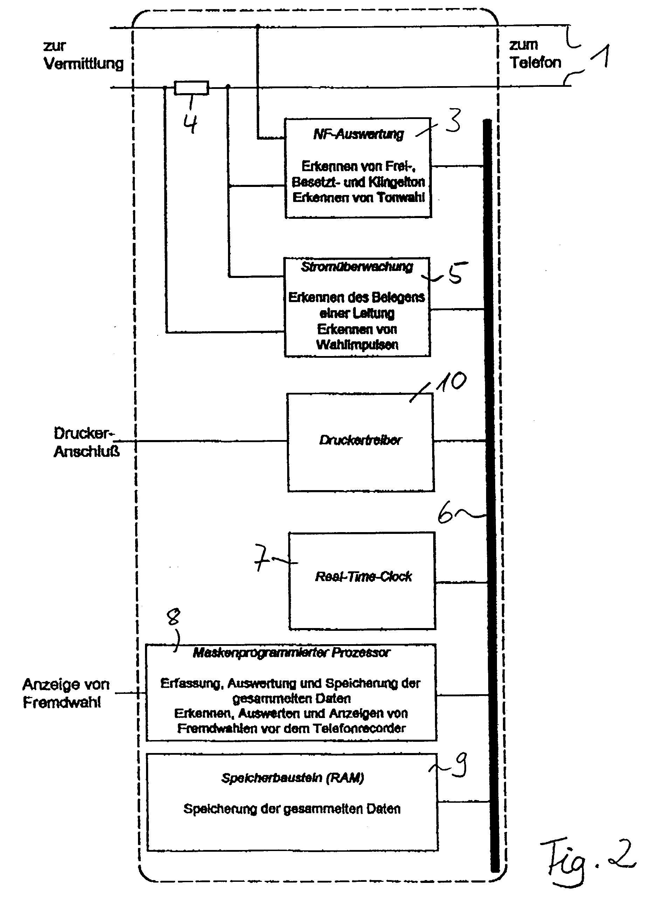

Figur 2 zeigt eine Modifikation des Gerätes gemäß Figur 1. Dieses Gerät ist in erster Linie für die eigene Information des Teilnehmers vorgesehen. Demzufolge ist in dem dargestellten Ausführungsbeispiel kein Detektor 2 für die Spannungsüberwachung vorgesehen. In diesem Fall ist es auch nicht unbedingt erforderlich, die im Speicher 9 abgespeicherten Signale zu codieren. Das Gerät enthält gegenüber dem Gerät in Figur 1 zusätzlich einen Druckertreiber 10, der an den Bus 6 angeschlossen ist. An das Gerät ist somit ein Drucker anschließbar, über den auf Anforderung die im Speicher abgespeicherten Informationen ausdruckbar sind. Auch dieses Gerät ist in gleicher Weise zur Erkennung von und Warnung vor FremdaufSchaltungen ausgebildet.

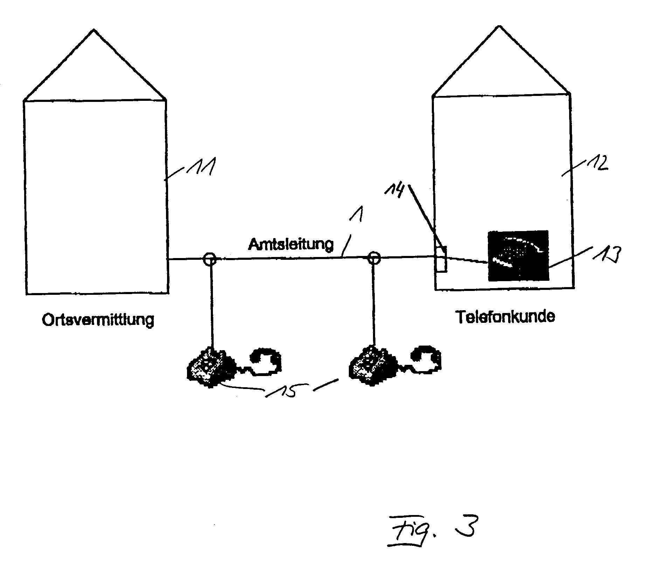

Figur 3 verdeutlicht den Zusammenhang zur Erkennung von Fremdaufschaltungen. Die Amtsleitung 1 verbindet eine Ortsvermittlungsstelle 11 mit dem Fernsprechteilnehmer 12, der ein entsprechendes Fernsprechgerät 13 installiert hat. Vor dem Fernsprechgerät 13 ist das in den Figuren 1 oder 2 dargestellte Geräte 14 installiert.

Wird die Amtsleitung 1 durch Fremdapparate 15 fremdbelegt, führt dies zu einem Stromfluß auf der Amtsleitung 1 zwischen Ortsvermittlung 11 und den Fremdgeräten 15, nicht aber auf der Amtsleitung 1 im Bereich des regulären Fernsprechgeräts 13 des Fernsprechteilnehmers 12. Demzufolge registriert das Gerät 14 im Bereich des Fernsprechteilnehmers 12 keinen Stromfluß, der bei einer Belegung der Amtsleitung 1 mit dem regulären Fernsprechgerät 13 entstehen würde. Hingegen sind alle Spannungssignale, beispielsweise durch Wählimpuls, Wähltöne oder Belegung der Amtsleitung 1 an dem Gerät 14 erkennbar. Die Diskrepanz zwischen diesen auftretenden Spannungsänderungen und dem Fehlen eines zugehörigen Stromflusses wird daher von dem Gerät 14 als Fremdaufschaltung detektiert.

## Patentansprüche

1. Vorrichtung zur Überwachung eines Telefonanschlusses (13) einer Amtsleitung (1) im Hinblick auf externe Fremdaufschaltungen, gekennzeichnet durch einen Stromsensor (5) zur Detektion des auf der Amtsleitung (1) fließenden Stromes und einen Spannungssensor (2) zur Detektion der zwischen den Leitern der Amtsleitung vorhandenen Spannung sowie durch eine Auswerteschaltung (8), die alle durch eine hergestellte oder herzustellende Verbindung hervorgerufene Änderung der Spannung und ein gleichzeitiges Fehlen eines zugehörigen Stromflusses am Telefonanschluß (13) als Fremdaufschaltung erkennt.

2. Vorrichtung nach Anspruch 1, gekennzeichnet durch ein an die Auswerteschaltung (8) angeschlossenes Warngerät.

3. Vorrichtung nach Anspruch 1 oder 2, gekennzeichnet durch eine weitere Verwendung des Stromsensors (5) und des Spannungssensors (2) zur Erfassung aller elektrischen Signale am Telefonanschluß (13).

4. Vorrichtung nach Anspruch 3, gekennzeichnet durch einen Speicher (9) zur Abspeicherung der erfaßten elektrischen Signale in unmittelbarer oder ausgewerteter Form.
